Europäisches Patentamt

European Patent Office

Office européen des brevets

(11) Veröffentlichungsnummer: **0 170 818**
**B1**

(12) EUROPÄISCHE PATENTSCHRIFT

(45) Veröffentlichungstag der Patentschrift:
07.01.88

(51) Int. Cl.⁴: **A 61 C 8/00**

(21) Anmeldenummer: 85106974.0

(22) Anmeldetag: 05.06.85

(54) **Kieferimplantat zur Aufnahme eines Zahnersatzträgers.**

(30) Priorität: 06.06.84 DE 3421056

(43) Veröffentlichungstag der Anmeldung:
12.02.86 Patentblatt 86/7

(45) Bekanntmachung des Hinweises auf die Patenterteilung:
07.01.88 Patentblatt 88/1

(84) Benannte Vertragsstaaten:
AT BE CH DE FR GB IT LI LU NL SE

(56) Entgegenhaltungen:
WO - A - 83/00616
AT - B - 263 200
DE - A - 2 540 077
DE - A - 2 615 116
DE - A - 2 628 443
DE - C - 3 241 963
DE - U - 7 729 616
US - A - 2 112 007
US - A - 4 229 169

(73) Patentinhaber: **Feldmühle Aktiengesellschaft,
Fritz-Vomfelde-Platz 4, D-4000 Düsseldorf 11 (DE)**

(72) Erfinder: **Plischka, Gerhard, Dr.med., Eckertstrasse 113,
A-8020 Graz (AT)**

## Beschreibung

Die vorliegende Erfindung betrifft ein Kieferimplantat mit einem Tragabschnitte aufweisenden Unterteil und einem Implantatkopf, der einen dem Unterteil benachbart liegenden zylindrischen Bereich und in seinem koronalseitigen kegelstumpfförmig ausgebildeten Bereich eine Öffnung zur Aufnahme eines Zahnersatzträgers aufweist.

Aus der US-A-4 229 169 ist ein Kieferimplantat bekannt, welches einen gewindeförmige Tragabschnitte aufweisenden zylindrischen Unterteil und einen Kopfteil aufweist, welcher Kopfteil koronalseitig mit einem halbkugelförmig abgerundeten Bereich, benachbart dem Unterteil mit einem mit konvexen Aussenkonturen versehenen Bereich und zwischen diesen beiden Bereichen mit einem zylindrischen Übergangsbereich ausgebildet ist, wobei der so gebildete Kopfteil einen grösseren Durchmesser aufweist als der Unterteil.

Die DE-A-25 40 077 beschreibt einstückige zylindrische Schraubenkörper mit einem sechseckig ausgebildeten Schraubenkopf zur Befestigung eines künstlichen Zahnes mittels Zement. Nachteilig dabei ist, dass durch die beim Kauen entstehenden Belastungen innerhalb kurzer Zeit eine Lockerung des Implantates eintritt und sich im Bereich des Schraubenkopfes zu Infektionsherden führende Taschen bilden. Zur Beseitigung dieser Nachteile schlägt die DE-A-25 40 077 eine Fixierung des zylindrischen Schraubenkörpers mit einer pyramidenstumpfförmigen Aufsatzmutter vor, die auf die aus der Oberseite des Kieferknochens herausragenden oberen Gewindegänge des Schraubenkörpers aufgeschraubt wird und mit ihrer Unterseite am Kieferknochen anliegt. Nachteilig bei diesem Vorschlag ist nicht nur die komplizierte Implantationstechnik, sondern auch die Gefahr, dass durch Atrophie des Knochens der Charakter eines Hybridimplantates, d.h.: eine Kombination zwischen Intraossal- und Subperiostallagerung eines und desselben Implantatkörpers entsteht. Vielfach kommt es bei einem solchen Implantat zur Nischen- und Tunnelbildung am Subperiostalteil mit dem Nachteil einer erhöhten Infektionsmöglichkeit. Der Nachteil des Vorschlages, am Ende des Schraubenkörpers ggf. eine weitere Schraubenmutter zur Verbesserung der Fixierung vorzusehen, besteht darin, dass eine Bohrung entsprechend dem Durchmesser der Schraubenmutter vorzusehen ist, die einen grösseren Hohlraum um den zylindrischen Schraubenkörper zur Folge hat, der erst im Laufe des Einheilungsprozesses mit Spongiosagewebe langsam zuwächst, so dass während der Einheilungsphase der zylindrische Schraubenkörper nicht zur Fixierung des Implantates beiträgt. Wird lediglich eine Aufsatzschraubenmutter verwendet, entstehen dadurch Nachteile dass nur ein sehr geringer Teil in der Corticalis und der weitaus grössere Teil im Zahnfleischgewebe liegt, wo er nur sehr geringfügig zur Fixierung des Implantates beitragen kann. Ein weiterer Nachteil besteht darin, dass durch die aus dem Zahnfleischgewebe in den Mundraum hinausragende Aufsatzschraubenmutter ein Hindernis für die instinktiv ausgeführten Zungenbewegungen entsteht, so dass der Einheilungsprozess nicht ungestört erfolgen kann, weil ständig minimale Verschiebungen des eingesetzten Implantates erfolgen, die den Einheilungsprozess empfindlich stören.

Die DE-A-26 15 116 betrifft eine Weiterentwicklung des vorstehend beschriebenen Vorschlages und sieht die Anbringung eines oder mehrerer Flansche unterhalb der Aufsatzmutter vor. Gegebenenfalls kann dabei auch auf die Verwendung der Aufsatzmutter verzichtet werden, so dass die Fixierung des Implantates ausschliesslich von der zylindrischen Schraube und dem oder den Flanschen übernommen wird. Auch diese Vorschläge weisen die beschriebenen Nachteile einer komplizierten Implantationstechnik auf, die im Anlegen einer Bohrung mit verschieden grossen Durchmessern von ganz bestimmter Tiefe besteht, wobei vor allem ins Auge fällt, dass zur Einbringung des oder der Flansche im Zahnfleischgewebe ein relativ grosser Einschnitt anzulegen ist, der von dem zur Aufnahme des künstlichen Zahnes vorgesehenen Schraubkopf oder von der Aufsatzmutter nur zum kleineren Teil ausgefüllt wird, so dass hier eine relativ lange Wundheilung zu erwarten ist. Zusätzlich verbleiben die bereits zur DE-A-25 40 077 beschriebenen Nachteile des sogenannten Hybridimplantates und dass die Zunge an den aus dem Kieferkamm herausragenden Schraubenkopf stösst.

Auch der in der DE-A-26 28 443 beschriebene schraubenförmige Implantatkörper weist den Nachteil auf, dass sein Schraubenkopf in die Mundhöhle ragt. Die selbstschneidenden Gewindegänge, die in bestimmten Abständen teilweise durchbrochen sind, damit sich in diesen Unterbrechungen bevorzugt neues Knochengewebe bilden kann, sind insofern nachteilig, als sie zunächst in diesem Bereich nicht von Knochengewebe ausgefüllt sind und zur Primärstabilität beitragen. Der entscheidende Nachteil besteht aber darin, dass im Bereich des hexagonal ausgebildeten Schraubenkopfes, der als Ansatz für ein Einschraubwerkzeug dient und einen kleineren Durchmesser als die äusseren Durchmesser der Gewindegänge aufweist, Hohlräume im Bereich der Corticalis entstehen, die von Knochengewebe zumindest nicht unmittelbar nach der Implantation ausgefüllt werden. Auch wenn zugrundegelegt wird, dass sowohl Schraubenende und die direkt unter dem Schraubenkopf liegenden Gewindegänge in das härtere Corticalisgewebe reichen, besteht infolge der Ausbildung der Gewindegänge als selbstschneidendes Gewebe die Gefahr, dass sich an den Spitzen der Gewindegänge Spannungsspitzen bilden, die eine starke Belastung des Knochengewebes zur Folge haben und ggf. eine vorzeitige Lockerung des Implantates bewirken.

Jüngere Vorschläge, wie sie aus der DE-A-30 43 336 und der DE-C-32 41 963 bekannt geworden sind, sehen Kopfstücke zur Aufnahme der Suprastruktur oder eines künstlichen Zahnes vor, die erst nach der Einheilung des Implantates aufgesetzt werden, so dass die oben beschriebene Gefahr der Lockerung des Implantatkörpers durch Zungenbewegungen während der Einheilungsphase des Implantatkörpers weitestgehend vermieden wird.

Bei dem aus der DE-A-30 43 336 bekannten Implantat besteht infolge des in geringer Höhe konisch ausgebildeten Abschnittes unterhalb der zur Einlagerung an die Schleimhaut vorgesehenen Manschette der Nachteil einer nur geringen Kontaktfläche mit der Corticalis, so dass in diesem besonders wichtigen Kieferbereich eine noch nicht ausreichende Fixierung, insbesondere bei nicht plan verlaufender Corticalis, zu erwarten ist. Nachteilig ist auch, dass nach oben kein die Implantate sicher fixierender Abschluss durch Knochen- bzw. Bindegewebe erreicht wird. Ferner führt das dort gezeigte konische Sägezahngewinde bei auftretendem Kaudruck zu Spannungsspitzen an den Gewindespitzen der Gewindegänge, die eine starke Belastung des Knochengewebes zur Folge haben und ggf. zu einer Lockerung des Implantates führen. Gemäss der DE-B-32 41 963 wurden deswegen bereits bei einem konisch ausgebildeten schraubenförmigen Implantat zwischen Oberteil und dem konischen Schraubenteil ein Ringwulst und ringförmige Einkerbungen vorgesehen, wobei der Durchmesser des Ringwulstes kleiner als der Durchmesser der Gewindespitzen beim obersten Gewindegang des konischen Gewindeteils ist. Obwohl hierbei die sogenannte Trichterbildung weitestgehend vermieden wird, besteht doch noch der Nachteil, dass im Bereich des Ringwulstes bzw. der ringförmigen Einkerbungen ein gewisser Hohlraum verbleibt, der sich erst nach und nach wieder mit Knochengewebe füllt, so dass dieser Bereich des Implantates während der Einheilungsphase nur zu einem geringeren Teil zum festen Sitz des Implantates beitragen kann.

Die DE-A-33 15 329 sieht ein zylindrisches Kieferimplantat mit einem Schneidgewinde in seinem mittleren Bereich vor. Der Nachteil dieses Implantates liegt darin, dass der oberhalb des Schneidgewindes sich befindende zylindrische Teil den gleichen Durchmesser aufweist wie der Kerndurchmesser im Gewindebereich, so dass oberhalb der Gewindegänge ein Hohlraum entsteht, der der Tiefe der Gewindegänge entspricht. Dadurch ist bei transversaler Belastung das Implantat in diesem oberen Bereich einem gewissen Kippmoment ausgesetzt. Nachteilig ist auch die komplizierte Form des Implantates, die eine Herstellung aus schwierig zu bearbeitenden Werkstoffen, wie z.B. aus Keramik, in erheblicher Weise erschwert.

Schliesslich ist aus der WO-A-83/00616 ein Kieferimplantat der eingangs beschriebenen Art bekannt, bei dem die auf dem Unterteil angeordneten Tragabschnitte nicht schraubenförmig, sondern in voneinander getrennten Stufen ausgebildet sind. Der zylindrisch ausgebildete Kopfabschnitt bietet in nachteiliger Weise keinen Anhaltspunkt für eine Plazierung in der Corticalis und kann infolge seiner Form auch der Wucherungstendenz des Zahnfleischgewebes nicht entgegenwirken. Nachteilig ist ferner der Abstand zwischen der Unterseite des Kopfes und dem benachbarten Tragabschnitt, der die Gefahr der Bildung von Hohlräumen birgt.

Ausgehend von diesem Stand der Technik will die vorliegende Erfindung ein zweiphasiges Kieferimplantat zur Verfügung stellen, das über eine einfache Bauform verfügt und infolgedessen lediglich eine unkomplizierte Implantationstechnik erfordert. Insbesondere will die Erfindung ein Kieferimplantat zur Verfügung stellen, das infolge seiner äusseren Form geeignet ist, die Entstehung von toten Knochenhohlräumen bereits unmittelbar nach seiner Plazierung im Kieferknochen stärker als bisher möglich zu vermeiden, um dadurch ganz besonders im Bereich der Corticalis eine vergrösserte Stützzone zu bewirken, durch die das Implantat bereits von Anfang an einen sicheren Sitz erhält.

Zur Lösung dieser Aufgabe sieht die Erfindung ein Kieferimplantat mit den kennzeichnenden Merkmalen von Anspruch 1 vor.

Zum Einsetzen des erfindungsgemässen Kieferimplantates wird eine Bohrung im Kieferknochen entsprechend dem Kerndurchmesser des Schraubengewindes in der Gesamtlänge des Implantates angelegt. In diese Bohrung wird durchgehend mit einem Gewindebohrer das Gegengewinde eingeschnitten. Nach Einsetzen eines Führungsstiftes wird mit einem Kronenbohrer der Sitz für den zylindrischen Bereich des Implantatkopfes eingefräst. Das Implantat wird so in die Bohrung eingeschraubt, dass der zylindrische Teil des Implantatkopfes die geschaffene Fräsung voll ausfüllt.

Da erfindungsgemäss der zylindrische Bereich des Implantatkopfes mit einem Durchmesser, nicht kleiner als der Aussendurchmesser der gewindeförmigen Tragabschnitte, ausgebildet ist, wird die Entstehung von Hohlräumen im Corticalisbereich vermieden und das erfindungsgemässe Implantat hat einen verbesserten Halt im Vergleich zu den bisherigen Implantaten bereits unmittelbar nach der Implantation. Desweiteren trägt zur Vermeidung der Bildung von Hohlräumen bei, dass der dem Implantatkopf benachbart liegende Gewindegang des Unterteils unmittelbar in den zylindrischen Bereich des Implantatkopfes übergeht und ein verbesserter Primärsitz wird durch die grosse Stützfläche des zylindrischen Bereiches innerhalb der Corticalis bewirkt.

Durch die Ausbildung des Unterteils in Form einer zylindrischen Schraube findet auch bereits von Anfang an über die gesamte Länge des Unterteiles eine Stützung des Kieferimplantates statt, weil im Gegensatz zu konisch verlaufenden Unterteilen die gewindeförmigen Tragabschnitte über die gesamte Länge des Implantates bereits unmittelbar nach Einsetzen einen optimalen Sitz in der mit vorgeschnittenen Gewindegängen versehenen Bohrung finden.

Schliesslich dient die kegelstumpfförmige Ausbildung des koronalseitigen, eine Öffnung zur Aufnahme eines Zahnersatzträgers aufweisenden Bereiches zum Erreichen eines dichten Abschlusses und gleicht evtl. einen nicht vollkommen planen Sitz an der Oberfläche dieses koronalseitigen Bereiches aus. Der grössere Durchmesser des Implantatkopfes in diesem Bereich vermeidet in vorteilhafter Weise, dass das Weiche des Schleimhautpolsters sich auf der nach occlusal verjüngenden Konusfläche anlegt und nach Einsetzen des Zahnersatzträgers in den Spalt zwischen der Unterfläche des Zahnersatzträgers und der koronalseitigen Oberfläche zu liegen kommt, was zu einer ständigen Gewebsunruhe an dieser Stelle führen würde.

Die konkaven Aussenkonturen des an den vorbeschriebenen Abschnitt apikalseitig anschliessenden und in den zylindrischen Bereich übergehenden Bereiches dienen zum Schutz der Schleimhautrandzone und hemmen in vorteilhafter Weise deren Wucherungstendenz.

Ein weiterer Vorteil des erfindungsgemässen Kieferimplantates besteht darin, dass durch den weitestgehend zylindrisch ausgebildeten Implantatkopf bzw. durch die Ausbildung des Unterteiles in Form einer zylindrischen Schraube schädliche Spannungsspitzen in der Corticalis, wie sie infolge von Kaubelastung auftreten und insbesondere bei den aus der DE-A-3043336 bekannten sägezahnartige Gewindegänge aufweisenden Implantaten beobachtet wurden, vermieden werden. Die Ausbildung des Unterteils in Form einer zylindrischen Schraube bringt auch den Vorteil, dass das Unterteil einfach auf die benötigte Länge gekürzt werden kann und keine Vielzahl von Implantaten unterschiedlicher Länge bereitgehalten werden muss.

Weitere vorteilhafte Ausführungsformen der vorliegenden Erfindung ergeben sich aus den abhängigen Ansprüchen.

Die nachfolgenden Figuren dienen der näheren Erklärung der Erfindung, ohne dass die Erfindung auf die gezeigten Ausführungsformen beschränkt ist.

Es zeigen:

Figur 1 eine Seitenansicht des erfindungsgemässen Kieferimplantates zusammen mit einem Zahnersatzträger in noch auseinandergezogener Darstellung;

Figur 2 einen vergrösserten Schnittaufbruch im Bereich II der Figur 1;

Figur 3 eine Aufsicht aus der Ebene III-III der Figur 1;

Figur 4 einen Schnitt in der Ebene IV-IV der Figur 1;

Figur 5 das in Figur 1 gezeigte Kieferimplantat, eingesetzt in einen Kieferknochen.

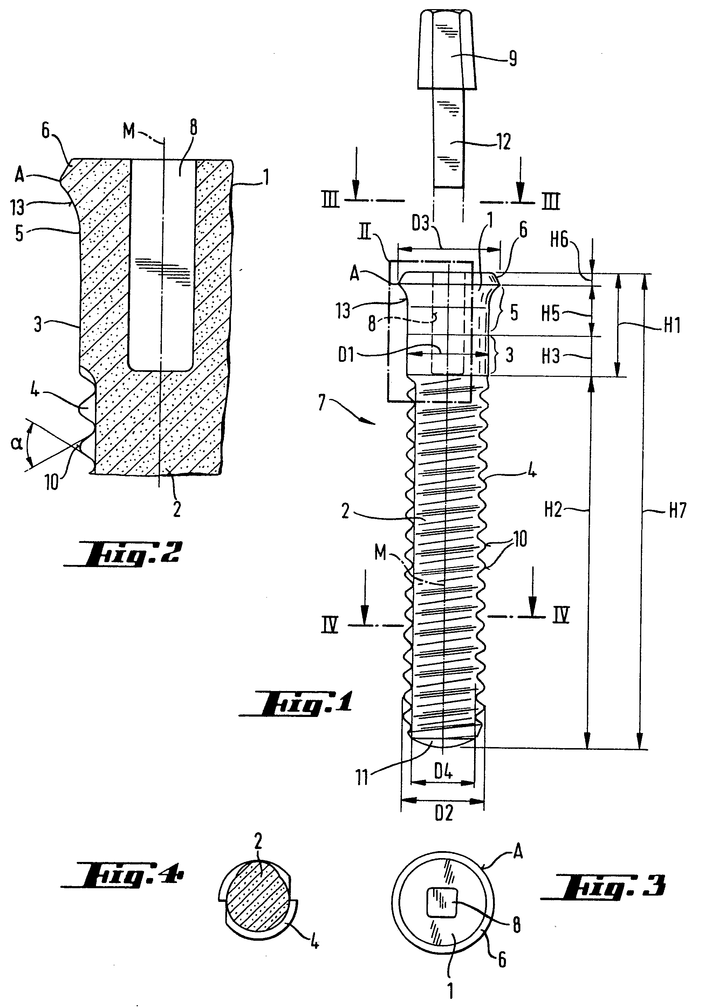

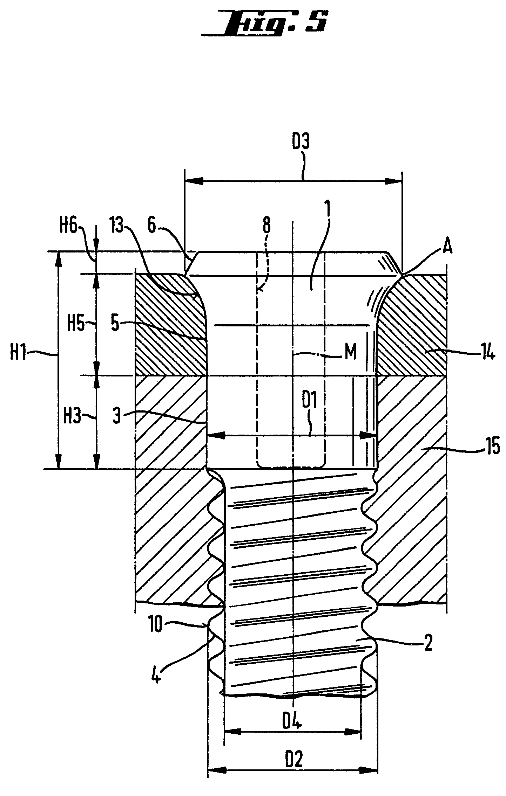

Figur 1 zeigt ein erfindungsgemässes Kieferimplantat 7 aus Aluminiumoxid. Das Kieferimplantat weist eine Gesamthöhe H 7 von 23 mm auf. Das zylindrische Unterteil 2 ist an seinem Ende 11 leicht abgerundet und weist eine Höhe H 2 von 18 mm auf. Auf dem zylindrisch ausgebildeten Unterteil 2 sind gewindeförmige Tragabschnitte 4 ausgebildet die einen Flankenwinkel alpha = 60 Grad (Figur 2) aufweisen. Das Unterteil 2 geht in den zylindrisch geformten Bereich 3 des Implantatkopfes 1 über. Der Implantatkopf 1 hat eine Höhe H 1 von insgesamt 5 mm. Der zur Einlagerung in die Corticalis vorgesehene zylindrische Bereich 3 hat eine Höhe H 3 von 3,2 mm und geht übergangslos in den Bereich 5 und dieser in den oberen Bereich 6 über. Der Bereich 6 ist kegelstumpfförmig ausgebildet und hat eine Höhe H 6 von 0,5 mm. An der Stelle A, an der die Bereiche 5 und 6 ineinander übergehen, weisen sie eine gemeinsame, die grössere Grundfläche des Kegelstumpfes des Bereiches 6 bildende Querschnittsfläche mit einem Durchmesser D 3 von 5 mm auf. Im oberen Bereich 6 ist eine Öffnung 8 zur Aufnahme des Zahnersatzträgers 9 mittels Zapfen 12 vorgesehen. Der Durchmesser D 1 im zylindrischen Bereich 3 beträgt 4 mm und entspricht dem Aussendurchmesser D 2 der gewindeförmigen Tragabschnitte 4. Der Kerndurchmesser D 4 beträgt 3,1 mm.

Wie in Figur 2 gezeigt, verlaufen die Aussenkonturen 13 des Bereiches 5 unterhalb der Übergangsstelle A konkav, d.h. in Richtung auf die Mittelachse M des Kieferimplantates 7 gekrümmt. Die gleiche Figur zeigt eine Verrundung 10 der gewindeförmigen Tragabschnitte 4 mit einem Radius r = 0,18 mm. Figur 3 zeigt, dass die Öffnung 8 eine im Querschnitt gesehen quadratische Form mit abgerundeten Ecken aufweist.

In Figur 5 ist der Sitz des erfindungsgemässen Kieferimplantates 7 mit Implantatkopf 1 und oberen Tragabschnitten 4 im Zahnfleisch 14 bzw. in der Corticalis 15 dargestellt. Dabei ist erkennbar, dass der zylindrisch ausgebildete Bereich 3 zu einem beträchtlichen Teil, fest anliegend, in der Corticalis 15 angeordnet ist, während der Bereich 5 mit Zahnfleischgewebe 14 umgeben ist. Das Corticalisgewebe 15 liegt auch eng angeschlossen an die gewindeförmigen Tragabschnitte 4 des nur teilweise dargestellten Unterteils 2.

**Patentansprüche**

1. Kieferimplantat (7) mit einem Tragabschnitte (4) aufweisenden Unterteil (2) und einem Implantatkopf (1), der einen dem Unterteil benachbart liegenden zylinderischen Bereich (3) aufweist und in seinem koronalseitigen, kegelstumpfförmigen Bereich (6) eine Öffnung (8) zur Aufnahme eines Zahnersatzträgers (9) besitzt, dadurch gekennzeichnet, dass das Unterteil (2) die Form einer zylindrischen Schraube aufweist, auf dem die Tragabschnitte (4) gewindeförmig ausgebildet sind, dass der Durchmesser D1 des zylindrischen Bereiches (3) nicht kleiner als der Aussendurchmesser D2 der gewindeförmigen Tragabschnitte (4) auf dem Unterteil (2) ist, dass der dem Implantatkopf (1) benachbart liegende gewindeförmige Tragabschnitt (4) unmittelbar in den zylindrischen Bereich (3) des Implantatkopfes (1) übergeht, dass zwischen dem koronalseitigen, kegelstumpfförmigen Bereich (6) des Implantatkopfes (1) und dem zylindrischen Bereich (3) ein Übergangs-Bereich (5) vorgesehen ist, dessen grössere Querschnittsfläche gegen die grössere Querschnittsfläche des kegelstumpfförmigen Bereiches (6) liegt und mit letzterer Querschnittsfläche flächengleich ist, wobei der Durchmesser D3 dieser gemeinsamen Querschnittsfläche grösser als der Durchmesser D1 des zylindrischen Bereiches (3) und grösser als der Durchmesser D2 der gewindeförmigen Tragabschnitte (4) ist und dass der Übergangs-Bereich (5) im Anschluss an den kegelstumpfförmigen Bereich (6) Aussenkonturen (13) aufweist, die zunächst konkav gekrümmt und dann parallel zur Längsachse des Implantates (7) verlaufen, so dass der Übergangs-Bereich (5) übergangslos in den zylindrischen Bereich (3) des Implantatkopfes (1) übergeht.

2. Kieferimplantat nach Anspruch 1, dadurch gekennzeichnet, dass der zylindrische Bereich (3) eine Höhe H3 von mindestens 1,5 mm aufweist.

3. Kieferimplantat nach einem der Ansprüche 1 und 2, dadurch gekennzeichnet, dass der zylindrische Bereich (3) eine Höhe H3 von 2 bis 5 mm aufweist.

4. Kieferimplantat nach einem der Ansprüche 1 bis 3, dadurch gekennzeichnet, dass der Implantatkopf (1) eine Höhe H1 von 4 bis 8 mm aufweist.

5. Kieferimplantat nach einem der Ansprüche 1 bis 4, dadurch gekennzeichnet, dass die Höhe H1 des Implantatkopfes (1) maximal 50% der gesamten Höhe H7 des Kieferimplantates (7) beträgt.

6. Kieferimplantat nach einem der Ansprüche 1 bis 5, dadurch gekennzeichnet, dass die Höhe H6 des kegelstumpfförmigen Bereichs (6) zwischen 7 und 15% der Höhe H1 des Schraubenkopfes (1) beträgt.

7. Kieferimplantat nach einem der Ansprüche 1 bis 6, dadurch gekennzeichnet, dass der Durchmesser D3 der gemeinsamen Querschnittsfläche von kegelstumpfförmigem Bereich (6) und Übergangs-Bereich (5) um 20 bis 30% grösser ist als die Durchmesser D1 des zylindrischen Bereiches (3) und D2 der gewindeförmigen Tragabschnitte (4).

8. Kieferimplantat nach einem der Ansprüche 1 bis 7, dadurch gekennzeichnet, dass der Durchmesser D1 des zylindrischen Bereiches (3) bis zu 75% grösser ist als der Durchmesser D2 des Unterteils (2).

9. Kieferimplantat nach einem der Ansprüche 1 bis 8, dadurch gekennzeichnet, dass der Aussendurchmesser D2 der gewindeförmigen Tragabschnitte (4) um 20 bis 30% grösser ist als der Kerndurchmesser D4 des Unterteils (2).

10. Kieferimplantat nach einem der Ansprüche 1 bis 9, dadurch gekennzeichnet, dass die Tragabschnitte (4) einen Flankenwinkel ($\alpha$) von 58 bis 62 Grad aufweisen.

11. Kieferimplantat nach einem der Ansprüche 1 bis 10, dadurch gekennzeichnet, dass die Kanten (10) der Tragabschnitte (4) mit einem Radius r = 0,16 bis 0,2 mm verrundet sind.

12. Kieferimplantat nach einem der Ansprüche 1 bis 11, dadurch gekennzeichnet, dass das Kieferimplantat (7) aus hochreinem Aluminiumoxid besteht.


**Claims**

1. Jaw implant (7) having a lower section (2) with supporting portions (4) and having an implant head (1), which has a cylindrical region (3) adjacent to the lower section and, in its region (6) on the coronal side, which is designed in the shape of a truncated cone, an opening (8) for receiving a dental prosthesis support (9), characterised in that
the lower section (2) is in the form of a cylindrical screw on which the supporting portions (4) are made in the form of a thread,
the diameter D1 of the cylindrical region (3) is no smaller than the external diameter D2 of the thread-like supporting portions (4) on the lower section (2),
the thread-like supporting portion (4) adjacent the implant head (1) merges directly with the cylindrical region (3) of the implant head (1),
between the truncated cone shaped region (6) of the implant head (1), on the coronal side, and the cylindrical region (3) is provided a transitional region (5) the larger cross-sectional surface of which lies against the larger cross-sectional surface of the truncated cone shaped region (6) and has the same area as the latter, the diameter D3 of this common cross-sectional surface being larger than the diameter D1 of the cylindrical region (3) and larger than the diameter D2 of the thread-like supporting portions (4), and that
the transitional region (5) adjoining the truncated cone shaped region (6) has external contours (13) which are first of all curved concavely and then extend parallel to the longitudinal axis of the implant (7), with the result that the transitional region (5) merges smoothly into the cylindrical region (3) of the implant head (1).

2. Jaw implant according to claim 1, characterised in that the cylindrical region (3) has a height H3 of at least 1.5 mm.

3. Jaw implant according to either of claims 1 and 2, characterised in that the cylindrical region (3) has a height H3 of from 2 to 5 mm.

4. Jaw implant according to any one of claims 1 to 3, characterised in that the implant head (1) has a height H1 of from 4 to 8 mm.

5. Jaw implant according to any one of claims 1 to 4, characterised in that the height H1 of the implant head (1) is a maximum of 50% of the total height H7 of the jaw implant (7).

6. Jaw implant according to any one of claims 1 to 5, characterised in that the height H6 of the truncated cone shaped region (6) is between 7 and 15% of the height H1 of the screw head (1).

7. Jaw implant according to any one of claims 1 to 6, characterised in that the diameter D3 of the common cross-sectional surface of the truncated cone shaped region (6) and the transitional region (5) is from 20 to 30% larger than is the diameter D1 of the cylindrical region (3) and D2 of the thread-like supporting portions (4).

8. Jaw implant according to any one of claims 1 to 7, characterised in that the diameter D1 of the cylindrical region (3) is up to 75% larger than the diameter D2 of the lower section (2).

9. Jaw implant according to any one of claims 1 to 8, characterised in that the external diameter D2 of the thread-like supporting portions (4) is from 20 to 30% larger than the core diameter D4 of the lower section (2).

10. Jaw implant according to any one of claims 1 to 9, characterised in that the supporting portions (4) have a flank angle ($\alpha$) of from 58 to 62 degrees.

11. Jaw implant according to any one of claims 1 to 10, characterised in that the edges (10) of the supporting portions (4) are rounded, with a radius r = from 0.16 to 0.2 mm.

12. Jaw implant according to any one of claims 1 to 11, characterised in that the jaw implant (7) is made of high purity aluminium oxide.


**Revendications**

1. Implant maxillaire (7) avec une partie inférieure (2) présentant des sections porteuses (4) et avec une tête d'implant (1) qui présente une zone (3) cylindrique voisine de la partie inférieure et possède dans sa zone (6) tronconique, côté couronne, une ouverture (8) pour la réception d'un support de prothèse dentaire (9), caractérisé en ce que,

la partie inférieure (2) présente la forme d'une vis cylindrique sur laquelle les sections porteuses (4) sont réalisées en forme de filetage,

le diamètre D1 de la zone cylindrique (3) n'est pas inférieur au diamètre extérieur D2 des sections porteuses (4) en forme de filetage sur la partie inférieure (2),

la section porteuse (4) en forme de filetage voisine de la tête d'implant (1) se raccorde directement à la zone cylindrique (3) de la tête d'implant (1),

une zone de transition (5) dont la plus grande section transversale est contiguë à la plus grande section transversale de la zone tronconique (6) et a la même aire que cette dernière section transversale, est prévue entre la zone (6) tronconique, côté couronne, de la tête d'implant (1) et la zone cylindrique (3), le diamètre D3 de cette section transversale commune étant plus grand que le diamètre D1 de la zone cylindrique (3) et plus grand que le diamètre D2 des sections porteuses (4) en forme de filetage,

et la zone de transition (5) présente à la suite de la zone tronconique (6) un profil extérieur (13) qui est tout d'abord courbé de manière concave puis s'étend parallèlement à l'axe longitudinal de l'implant (7), de telle sorte que la zone de transition (5) se raccorde sans transition à la zone cylindrique (3) de la tête d'implant (1).

2. Implant maxillaire selon la revendication 1, caractérisé en ce que la zone cylindrique (3) présente une hauteur H3 d'au moins 1,5 mm.

3. Implant maxillaire selon l'une des revendications 1 et 2, caractérisé en ce que la zone cylindrique (3) présente une hauteur H3 de 2 à 5 mm.

4. Implant maxillaire selon l'une des revendications 1 à 3, caractérisé en ce que la tête d'implant (1) présente une hauteur H1 de 4 à 8 mm.

5. Implant maxillaire selon l'une des revendications 1 à 4, caractérisé en ce que la hauteur H1 de la tête d'implant (1) correspond au maximum à 50% de la hauteur totale H7 de l'implant maxillaire (7).

6. Implant maxillaire selon l'une des revendications 1 à 5, caractérisé en ce que la hauteur H6 de la zone tronconique (6) représente entre 7 et 15% de la hauteur H1 de la tête de vis (1).

7. Implant maxillaire selon l'une des revendications 1 à 6, caractérisé en ce que le diamètre D3 de la section transversale commune de la zone tronconique (6) et de la zone de transition (5) est supérieur de 20 à 30% aux diamètres D1 de la zone cylindrique (3) et D2 des sections porteuses (4) en forme de filetage.

8. Implant maxillaire selon l'une des revendications 1 à 7, caractérisé en ce que le diamètre D1 de la zone cylindrique (3) est jusqu'à 75% supérieur au diamètre D2 de la partie inférieure (2).

9. Implant maxillaire selon l'une des revendications 1 à 8, caractérisé en ce que le diamètre extérieur D2 des sections porteuses (4) en forme de filetage est supérieur de 20 à 30% au diamètre D4 du noyau de la partie inférieure (2).

10. Implant maxillaire selon l'une des revendications 1 à 9, caractérisé en ce que les sections porteuses (4) présentent un angle au sommet (α) compris entre 58 et 62 degrés.

11. Implant maxillaire selon l'une des revendications 1 à 10, caractérisé en ce que les arêtes (10) des sections porteuses (4) sont arrondies avec un rayon r compris entre 0,16 et 0,2 mm.

12. Implant maxillaire selon l'une des revendications 1 à 11, caractérisé en ce que l'implant maxillaire (7) est constitué d'oxyde d'aluminium de grande pureté.

_Fig.2_

_Fig.1_

_Fig.4_

_Fig.3_

Fig. 5